**Europäisches Patentamt**

**European Patent Office**

**Office européen des brevets**

(11) Veröffentlichungsnummer: **0 274 638 B1**

# EUROPÄISCHE PATENTSCHRIFT

(45) Veröffentlichungstag der Patentschrift: **13.03.91**

(21) Anmeldenummer: 87117709.3

(22) Anmeldetag: **30.11.87**

(51) Int. Cl.5: **G01J 5/62**, G02B 26/04, H02K 29/10

(54) Optischer Modulator für ein Strahlungspyrometer.

(30) Priorität: **12.12.86 DE 3642550**

(43) Veröffentlichungstag der Anmeldung:
**20.07.88 Patentblatt 88/29**

(45) Bekanntmachung des Hinweises auf die
Patenterteilung:
**13.03.91 Patentblatt 91/11**

(84) Benannte Vertragsstaaten:
**DE FR GB IT NL**

(56) Entgegenhaltungen:
FR-A- 1 150 327
US-A- 2 875 342
US-A- 3 559 014

TECHNISCHES MESSEN, Band 52, Nr. 6, Juni
1985, Seiten 264-268, München, DE; W.
GLOCKMANN: "Optoelektronische Temperaturmesstechnik mit Pyrosoren"

(73) Patentinhaber: **Heimann GmbH**
**Weher Köppel 6 Postfach 30 07**
**W-6200 Wiesbaden 1(DE)**

(72) Erfinder: **Laich, Michael**
**Platanenweg 14**
**W-6507 Ingelheim(DE)**

(74) Vertreter: **Fuchs, Franz-Josef, Dr.-Ing. et al**
**Postfach 22 13 17**
**W-8000 München 22(DE)**

## Beschreibung

Die Erfindung betrifft einen optischen Modulator für ein Strahlungspyrometer mit einer von einem Elektromotor mit einem dauermagnetischen Rotor angetriebenen Unterbrecherscheibe zur Modulation der Infrarotstrahlung zwischen einem Meßobjekt und einem pyroelektrischen Detektor und einer Lichtschranke zur Signalaufbereitung. Die Unterbrecherscheibe unterbricht dabei den Strahlengang zwischen dem Meßobjekt und einem pyroelektrischen Strahlendetektor sowie zur Aufbereitung des Detektorsignales den Strahlengang einer Lichtschranke periodisch. Ein derartiger modulator ist aus der Druckschrift 'Technisches Messen', Band 52, Nr 6, Juni 1985, Seiten 264-268, W. GLOCKMANN : "Optoelektronische Tempertur messtechnit mit Pyrosoren" bekannt.

An den zum Antrieb der Unterbrecherscheibe dienenden Elektromotor werden folgende Forderungen gestellt:

Eine möglichst große Unterbrecherscheibe soll mit einer hohen und stabilen Drehzahl angetrieben werden. Der Modulator muß mechanisch und elektronisch an die Gerätebedingungen anpaßbar sein und eine hohe Lebensdauer besitzen. Die Modulationsfrequenz und damit die Drehzahl des Motors sollen leicht veränderbar sein. Ein exakter Rundlauf muß gewährleistet sein, so daß Jitter-Effekte vermieden sind. Das Tastverhältnis muß exakt eingehalten werden. Es müssen Rechtecksignale zur elektronischen Signalaufbereitung erzeugbar sein, die phasenstarr zur Modulation der Infrarotstrahlung liegen. Der Modulator muß in einer Richtung immer sicher anlaufen und bei geringem Leistungsbedarf mit Gleichspannung betreibbar sein. Bei geringem Platzbedarf und hoher Lebensdauer müssen die Herstellungskosten gering sein. Er muß im Gerät leicht befestigbar sein und soll an verschiedene Spannungen angepaßt werden können.

Der Erfindung liegt die Aufgabe zugrunde, einen optischen Modulator der eingangs genannten Art hinsichtlich des Antriebsmotors für die Unterbrecherscheibe optimal an die gestellten Forderungen anzupassen.

Diese Aufgabe ist erfindungsgemäß dadurch gelöst, daß der Rotor von einem Ring gebildet ist, der aus einzelnen Magneten zusammengesetzt ist, die mit gleichen Polen aneinander angrenzen und daß das Signal zur Kommutierung der Statorspannung vom Ausgangssignal der Lichtschranke, die von der Unterbrecherscheibe mitmoduliert wird, gewonnen ist. Bei dem erfindungsgemäßen Modulator ist ein Elektromotor vorgesehen, bei dem durch einen magnetischen Nebenschluß eine solche Ruhelage erzielt werden kann, daß der Rotor immer in einer Richtung anläuft. Das Signal zur Kommutierung der Statorspannung wird vom Ausgangssignal der Lichtschranke gewonnen. Die Unterbrecherscheibe erfüllt daher durch periodische Unterbrechung der Infrarotstrahlung und der Lichtschranke mehrere Aufgaben, nämlich die Modulierung des Detektorsignales und durch Unterbrechung einer Lichtschranke die Signalaufbereitung und die Kommutierung der Statorspannung des Elektromotors. Das Lichtschrankensignal, welches zur phasenempfindlichen Gleichrichtung des Detektorsignales dient, kann ferner auch noch in einem Drehzahlregelkreis als Istwertsignal für die Motordrehzahl benutzt werden, denn seine Frequenz hängt von dieser Drehzahl ab.

Eine besonders zweckmäßige Ausgestaltung der Erfindung besteht darin, daß zwei einander gegenüberliegende Statorteile mit je einem U-förmigen, zum Rotor offenen Kern mit einer Wicklung vorhanden sind, die derart angeordnet sind, daß die die Wicklungen tragenden Schenkel auf einer senkrecht zur Drehachse verlaufenden Achse liegen und der andere Schenkel des einen Statorteiles oberhalb und des anderen Statorteiles unterhalb dieser Achse liegt.

Die Erfindung ist nachfolgend anhand der Zeichnung näher erläutert. Es zeigen:

Fig. 1 und 2     eine schematische Darstellung eines Elektromotors nach der Erfindung im stromlosen und eingeschalteten Zustand,

Fig. 3     eine Variante des Elektromotors gemäß den Fig. 1 und 2 im Ruhezustand,

Fig. 4     eine andere Ausführungsform eines Elektromotors nach der Erfindung,

Fig. 5     den Elektromotor gemäß Fig. 4 in einem optischen Modulator, und

Fig. 6     ein Schaltbild zur Erläuterung der Wirkungsweise des Modulators gemäß Fig. 5.

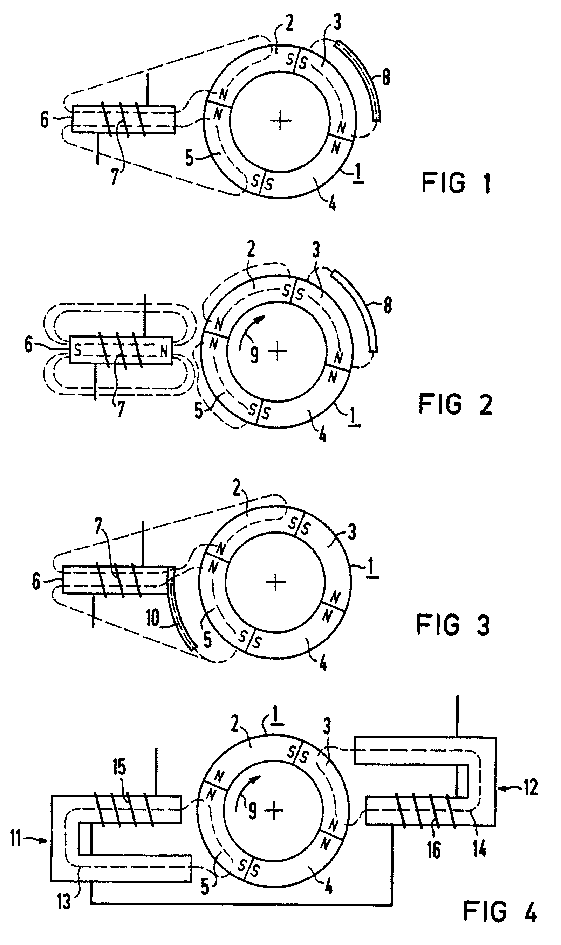

In den Fig. 1 und 2 ist ein Elektromotor mit einem ringförmigen Rotor 1 dargestellt, bei dem der Rotor 1 aus einzelnen Magneten 2, 3, 4, 5 zusammengesetzt ist, die mit gleichen Polen aneinander angrenzen. Der Statorkern ist so angeordnet, daß seine Achse senkrecht zur Drehachse steht. Die Statorwicklung 7 wird von einem Wechselstrom gespeist, der z.B. durch Kommutierung eines Gleichstromes gewonnen wird.

Im stromlosen Ruhezustand gemäß Fig. 1 nimmt der Rotor 1 die in der Fig. 1 dargestellte Stellung ein, in der die beiden linken Nordpole des Rotors 1 etwas oberhalb der Achse des Kernes 6 liegen. Dies ist durch einen magnetischen Nebenschluß 8 erreicht. Wird die Spule 7 für den Motoranlauf von einem Stromimpuls durchflossen, der die in Fig. 2 gezeigten Magnetpole des Kernes 6 zur Folge hat, so läuft der Rotor 1 in Richtung des Pfeiles 9, also in einer definierten Richtung an. Durch eine Lichtschranke kann dafür gesorgt werden, daß der Strom in der Wicklung 7 jeweils so umgepolt wird, daß die Drehrichtung (Pfeil 9) beibehalten wird.

Bei dem Ausführungsbeispiel gemäß Fig. 3 ist ein magnetischer Nebenschluß 10 vorgesehen, der am Ende des Kernes 6 aufgesetzt ist. Auch dadurch kann eine solche Lage der Pole des Rotors 1 im Ruhezustand erreicht werden, daß der Rotor 1 in einer definierten Richtung anläuft.

Die Fig. 4 zeigt ein Ausführungsbeispiel mit zwei Statorteilen 11, 12, die jeweils einen zum Rotor 1 offenen, U-förmigen Kern 13, 14 aufweisen. Die die Wicklungen 15, 16 tragenden Schenkel der Kerne 13, 14 sind so angeordnet, daß sie eine gemeinsame Achse besitzen, die senkrecht durch die Drehachse verläuft. Zur Bildung eines magnetischen Nebenschlusses und damit einer definierten Anlaufrichtung liegt der jeweils wicklungslose Schenkel der Statorteile 11, 12 einmal unterhalb und einmal oberhalb der Drehachse.

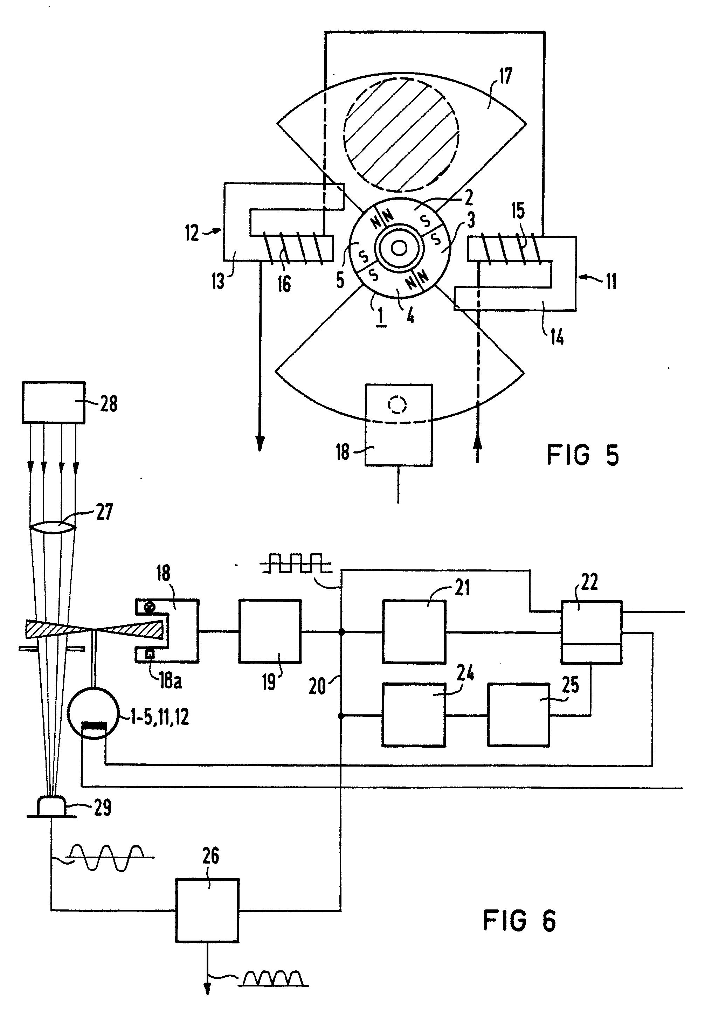

In der Fig. 5 ist die Anwendung des Motors gemäß Fig. 4 in einem optischen Modulator eines Strahlungspyrometers dargestellt. Hierzu ist mit dem Rotor 1 eine Unterbrecherscheibe 17 verbunden, welche die Infrarotstrahlung eines Meßobjektes 28 (Fig. 5) und eine Lichtschranke 18 mit einem Detektor 18a periodisch unterbricht.

Gemäß dem Schaltbild in Fig. 6 wird von der Unterbrecherscheibe die vom Meßobjekt 28 ausgehende und von der Linse 27 gebündelte Infrarotstrahlung moduliert. Der pyroelektrische Detektor liefert somit eine Wechselspannung. Die Unterbrecherscheibe 17 erzeugt phasenstarr zu dieser Wechselspannung durch die Lichtschranke 18 eine Rechteckspannung, die in einem Komparator 19 verstärkt wird und über die Leitung 20 die Steuerung des phasenempfindlichen Gleichrichters 26 übernimmt. Andererseits bewirkt das Rechtecksignal nach Invertierung in einem Inverter 21 die Steuerung einer Brückenschaltung 22 zur Kommutierung des Elektromotors 1 bis 5, 11, 12. Ein Frequenz-Spannungswandler 24 erzeugt eine der Drehzahl entsprechende Spannung als Istwertsignal, die einem Regler 25 zugeführt wird, der dieses Istwertsignal mit einer vorgegebenen Führungsgröße vergleicht und dem Treiber 22 ein der Regelabweichung entsprechendes Signal im Sinne einer Nachführung des Istwertes an den durch die Führungsgröße vorgegebenen Sollwert liefert.

## Ansprüche

1.  Optischer Modulator für ein Strahlungspyrometer mit einer von einem Elektromotor mit einem dauermagnetischen Rotor (1) angetriebenen Unterbrecherscheibe (17) zur Modulation der Infrarotstrahlung zwischen einem Meßobjekt (28) und einem pyroelektrischen Detektor (29) und einer Lichtschranke (18) zur Signalaufbereitung, **dadurch gekennzeichnet,** daß der Rotor (1) von einem Ring gebildet ist, der aus einzelnen Magneten (2 bis 5) zusammengesetzt ist, die mit gleichen Polen aneinander angrenzen und daß das Signal zur Kommutierung der Statorspannung vom Ausgangssignal der von der Unterbrecherscheibe (17) mitmodulierten Lichtschranke (18) gewonnen ist.

2.  Modulator nach Anspruch 1, **dadurch gekennzeichnet,** daß der Stator (6, 7, 8, 11, 12) einen magnetischen Nebenschluß (8, 13, 14) für das Rotorfeld aufweist, derart, daß ein Anlauf in einer vorgegebenen Richtung (9) erfolgt.

3.  Modulator nach Anspruch 2, **dadurch gekennzeichnet,** daß der Stator mindestens einen U-förmigen Statorkern (13, 14) aufweist, der nur auf einem Schenkel eine Statorwicklung (15, 16) trägt und mit seinen Stirnseiten gegen den Rotor (1) gerichtet ist.

4.  Modulator nach Anspruch 3, **dadurch gekennzeichnet,** daß zwei einander gegenüberliegende Statorteile (11, 12) mit je einem U-förmigen, zum Rotor (1) offenen Kern (13, 14) mit einer Wicklung (15, 16) vorhanden sind, die derart angeordnet sind, daß die jeweils eine Wicklung tragenden Schenkel auf einer senkrecht zur Drehachse verlaufenden Achse liegen und der andere Schenkel des einen Statorteiles (11) unterhalb und der des anderen Statorteiles (12) oberhalb dieser Achse liegt.

5.  Modulator nach einem der Ansprüche 1 bis 4, **dadurch gekennzeichnet,** daß das Ausgangssignal des Detektors (18a) der Lichtschranke (18) auch das Istwertsignal in einem Regelkreis (19, 20, 24, 25) für die Drehzahl des Elektromotors (1, 11, 12) ist.

## Claims

1.  Optical modulator for a radiation pyrometer with an interrupter disc (17), driven by an electric motor with a permanent-magnet rotor (1), for the modulation of the infrared radiation between an object of measurement (28) and a pyro-electrical detector (29) and a light barrier (18) for signal preparation, characterized in that the rotor (1) is formed of a ring which is composed of individual magnets (2 to 5) which abut against one another with like poles and in that the signal for the commutation of the stator voltage is obtained from the output signal of the light barrier (18) co-modulated by the interrupter disc (17).

2. Modulator according to claim 1, characterized in that the stator (6, 7, 8, 11, 12) has a magnetic shunt (8, 13, 14) for the rotor field in such a way that a start takes place in a specified direction (9).

3. Modulator according to claim 2, characterized in that the stator has at least one U-shaped stator core (13, 14) which carries a stator winding (15, 16) on only one limb and is aligned with its front sides against the rotor (1).

4. Modulator according to claim 3, characterized in that two stator parts (11, 12) lying opposite one another are present, each with a U-shaped core (13, 14) open to the rotor (1) with a winding (15, 16), which are arranged in such a way that the limbs, each carrying a winding, lie on an axis extending perpendicularly to the axis of rotation and the other limb of one of the stator parts (11) lies beneath this axis and that of the other stator part (12) lies above it.

5. Modulator according to one of claims 1 to 4, characterized in that the output signal of the detector (18a) of the light barrier (18) is also the actual-value signal in a regulating circuit (19, 20, 24, 25) for the speed of the electric motor (1, 11, 12).

## Revendications

1. Modulateur optique pour un pyromètre optique ou à radiations comportant un disque interrupteur (17) entraîné par un moteur électrique et comportant un rotor (1) à aimants permanents, pour moduler le rayonnement infrarouge entre un objet à mesurer (28) et un détecteur pyroélectrique (29), et un relais photoélectrique (18) pour préparer le signal, caractérisé par le fait que le rotor (1) est formé par un anneau constitué par la réunion de plusieurs aimants (2 à 5), qui se jouxtent par leurs pôles de même nom et que le signal servant à réaliser la commutation de la tension du stator est obtenu à partir du signal de sortie du relais photoélectrique (18) modulé par le disque interrupteur (17).

2. Modulateur suivant la revendication 1, caractérisé par le fait que le stator (6,7,8,11,12) possède une dérivation magnétique (8,13,14) pour le champ du rotor, de sorte qu'un démarrage s'effectue dans le sens prédéterminé (9).

3. Modulateur suivant la revendication 2, caractérisé par le fait que le stator possède au moins un noyau statorique en forme de U (13,14), dont seule une branche porte un enroulement statorique (15,16) et dont les faces frontales sont dirigées vers le rotor (1).

4. Modulateur suivant la revendication 3, caractérisé par le fait qu'il est prévu deux parties (11,12) du stator, qui sont disposées en vis-à-vis l'une de l'autre et comportent respectivement un noyau en forme de U (13,14) ouvert en direction du rotor (1) et pourvu d'un enroulement (15,16) et sont disposées de telle sorte que les branches, qui portent des enroulements respectifs, sont situées sur un axe perpendiculaire à l'axe de rotation et que l'autre branche d'une première partie (11) du stator est située au-dessous de l'axe tandis que l'autre branche de l'autre partie (12) du stator est située au-dessus de cet axe.

5. Modulateur suivant l'une des revendications 1 à 4, caractérisé par le fait que le signal de sortie du détecteur (l8a) du relais photoélectrique (18) est également le signal de valeur réelle dans un circuit de régulation (19,20, 24,25) de la vitesse de rotation du moteur électrique (1,11, 12).

EP 0 274 638 B1

FIG 1

FIG 2

FIG 3

FIG 4

FIG 5

FIG 6